# EUROPEAN PATENT SPECIFICATION

(11) **EP 4 526 841 B1**
(45) Date of publication and mention of the grant of the patent: **25.02.2026**
(21) Application number: 23793042.5
(22) Date of filing: 29.09.2023
(51) Int. Cl.: G06T 7/12

(54) **A COMPUTER-IMPLEMENTED METHOD, COMPUTER PROGRAM PRODUCT AND IMAGING SYSTEM FOR CENTERLINES COMPUTATION FROM A 3D MODEL OF A TUBULAR STRUCTURE**
COMPUTERIMPLEMENTIERTES VERFAHREN, COMPUTERPROGRAMMPRODUKT UND BILDGEBUNGSSYSTEM ZUR BERECHNUNG VON MITTELLINIEN AUF BASIS EINES 3D-MODELLS EINER RÖHRENARTIGEN STRUKTUR
PROCÉDÉ MIS EN OEUVRE PAR ORDINATEUR, PRODUIT DE PROGRAMME INFORMATIQUE ET SYSTÈME D'IMAGERIE DE CALCULER DES LIGNES CENTRALES SUR LA BASE D'UN MODÈLE TRIDIMENSIONEL D'UNE STRUCTURE TUBULAIRE

(30) Priority: 22.12.2022 EP 22461648
(43) Date of publication of application: 26.03.2025
(73) Proprietor: HEMOLENS DIAGNOSTICS SPOLKA Z OGRANICZONA ODPOWIEDZIALNOSCIA, 54-202 Wroclaw (PL)
(72) Inventor: KONOPCZYNSKI, Tomasz, 54-105 Wroclaw (PL); MOROZ, Lukasz, 66-010 Nowogrod Bobrzanski (PL); CUPIAL, Bartlomiej, 44-100 Gliwice (PL)
(74) Representative: Bury & Bury
(86) International application number: PCT/IB2023/059807
(87) International publication number: WO 2024/134284

(56) References cited:
- US-B2- 9 430 827
- YIN WANG ET AL: "3-D Quantitative Vascular Shape Analysis for Arterial Bifurcations via Dynamic Tube Fitting", IEEE TRANSACTIONS ON BIOMEDICAL ENGINEERING, IEEE, USA, vol. 59, no. 7, July 2012 (2012-07-01), pages 1850 - 1860, XP011447498, ISSN: 0018-9294, DOI: 10.1109/TBME.2011.2179654
- OSCAR KIN-CHUNG AU ET AL: "Skeleton extraction by mesh contraction", ACM TRANSACTIONS ON GRAPHICS, ACM, NY, US, vol. 27, no. 3, August 2008 (2008-08-01), pages 1 - 10, XP058355353, ISSN: 0730-0301, DOI: 10.1145/1360612.1360643

## Description

### FIELD OF THE INVENTION

The invention concerns a computer-implemented method, computer program product and imaging system for centerlines computation from a 3D model of a tubular structure. It is useful, in particular for simulating blood flow with computational fluid dynamics, in blood vessel geometries extracted from medical 3D volumes of contrast filled arteries and for enhancing visualization of blood vessels in medical 3D volumes.

### BACKGROUND ART

Cardiovascular disease is one of the main causes of death in the world. With developments in Computer Tomography (CT) non-invasive approaches for accurate diagnosis in patients with suspected ischemic heart disease became possible.

CT scans are commonly represented as a 3D volume image. Such a 3D volume image represents a physical quantity as a function of three spatial coordinates. In a digital volume image, each sample (voxel) represents this quantity measured at a specific location. The image is made by a spatial sequence of 2D slices that include the object of interest.
Typically, a slice is represented as an image matrix of pixels (X and Y coordinates). The slice number indicates the Z-coordinate.

Interpretation of CT images and diagnosis of cardiovascular disease is a non-trivial task, that requires highly trained physicians. A common problem is that the interpretation of projections visible on CT images requires a highly skilled radiologist and diagnosing of a cardiovascular disease takes a skilled cardiologist. People who have competences in both fields are in short supply. Therefore, computer-aided techniques are needed.

One way to diagnose cardiac pathologies with the aid of a computer is to produce a diagnosis- assisting 3D model of blood vessels. Especially, in the field of cardiac pathologies, a detailed 3D model of coronary arteries is required. A detailed model allows precise estimation of patient-specific anatomical and functional features, such as hemodynamic parameters. In the state of the art, there are numerous techniques utilizing computational fluid dynamics (CFD) for blood flow simulation. The geometry of a vessel presented in the 3D volumetric image can be represented as a subset of voxels of the 3D image, a surface mesh, a volumetric mesh, or as a point cloud. An example of a CFD technique used for calculation of the fractional flow reserve (FFR) out of a 3D model of coronary arteries from Coronary Computed Tomography Angiography (CCTA) is disclosed in the European patent EP3820357.

The centerline is defined as a polygonal chain of points and is computed with sub-voxel resolution. It represents geometrical position of the center of the cross section of a blood vessel along the length of this blood vessel. It is used in simulation and generation of image representations of the blood vessels. Methods for determination of centerlines are extensively developed and are known in the art e.g. from US20170018116A1, US9129417B2, CN108133478B, US11069078B2. YIN WANG ET AL: "3-D Quantitative Vascular Shape Analysis for Arterial Bifurcations via Dynamic Tube Fitting", IEEE TRANSACTIONS ON BIOMEDICAL ENGINEERING, IEEE, USA, vol. 59, no. 7, July 2012 DOI: 10.1 109/TBME.2011.2179654 discloses computer implemented method for extraction of an anatomically valid centerline implemented in Matlab and based on processing a skeleton graph obtained from geometry of blood vessels.

Objects having curvy shapes in 3D, when represented in CT images of limited resolution, are prone to a number of artifacts, that distort the shape of a centerline. One of the typical artifacts, adversely affecting known algorithms for the determination of centerlines, is a so-called blooming artifact caused by a high density of calcified atherosclerotic plaques and density of contrast applied to the patient for imaging. The former is most severe, when contrast concentrates in a certain area. Another typical artifact is the so-called motion artifact, which appears frequently in imaging including the heart. Motion artifact is caused by the moves of the patient during the process of imaging. Misregistration artifacts appear as blurring, streaking, or shading. Blurring also occurs with patient movement during radiographic examinations and causes distortion resembling waves in the blood vessel.

The key to an accurate simulation enabling diagnosis of cardiovascular disease is a precise 3D model of the coronary arteries. To allow both the creation of a precise 3D model and an accurate simulation, a method for centerline extraction from a geometry is required. The centerline of a tubular object is defined as a polygonal chain, i.e., a curve, specified by a sequence of points (or vertices) connected by edges. Since we consider only 3D models, these points are always in the 3D space. Both the geometry and the centerline are represented in the sub-voxel precision. The first and the last point on the centerline are required to be at the beginning and at the end of the geometry, respectively. All points and corresponding edges are required to be inside and in the center of the cross section of the geometry. As coronary artery consists of several branches, so does its 3D model. Therefore, for each coronary artery several centerlines must be extracted, one for each branch.

Centerline extraction is a vital part of the 3D model creation process. Centerlines of the 3D blood vessel models are used for the generation of adequate vessel views, called curved, planar reformation (CPR), which are used by physicians during segmentation tasks, topological analysis and diagnosis. Therefore, constructing adequate centerlines for coronary arteries is important for diagnosing vascular diseases, estimating the size of coronary artery stenosis, and blood flow simulation.

One of the most common methods for computing centerlines given a geometry utilizes a Voronoi diagram of the 3D geometry model, as it has been disclosed in Antiga, Luca. "Patient-specific modeling of geometry and blood flow in large arteries." Politecnico di Milano (2002) and is offered as a working computer program library documented and available online at: http://www.vmtk.org/tutorials/Centerlines.html. The main advantage of this approach is that this method yields mathematically well-defined centerlines of high quality at the cost of providing a geometry model of a blood vessel. However, it is common for the method to fail when a vessel is thin and curved.

Another approach consists of the extraction of centerlines directly from the provided image. This allows to skip the geometry extraction in the process at the cost of the centerline quality. An example is a method that feeds a local patch of an image to the neural network and in an iterative process tries to determine the location of the next point on the centerline, bifurcation points and possible end of the vessel, as it is disclosed in Zhang, Pengyue, Fusheng Wang and Yefeng Zheng. "Deep Reinforcement Learning for Vessel Centerline Tracing in Multi-modality 3D Volumes." MICCAI (2018). Another example method, disclosed in US9129417B2, extracts whole centerlines by applying a filter to the image, to determine the vessel location and by applying a thinning procedure (skeletonization) to find centerlines. Additional, applicable methods have been disclosed e.g., Xiong G, Sun P, Zhou H, Ha S, Hartaigh BO, Truong QA, Min JK. "Comprehensive Modeling and Visualization of Cardiac Anatomy and Physiology from CT Imaging and Computer Simulations." IEEE Trans Vis Comput Graph. 2017 Feb; 23(2):1014-1028. doi: 10.1109/TVCG.2016.2520946. Epub 2016 Feb 5. PMID: 26863663; PMCID: PMC4975682. The main disadvantages of these methods are high sensitivity to anatomical differences between patients and image acquisition. YIN WANG ET AL: "3-D Quantitative Vascular Shape Analysis for Arterial Bifurcations via Dynamic Tube Fitting", IEEE TRANSACTIONS ON BIOMEDICAL ENGINEERING, IEEE, USA, vol. 59, no. 7, July 2012 (2012-07), pages 1850-1860, XP01 1447498, ISSN: 0018-9294, DOI: 10.1 109/TBME.2011 .2179654 discloses a computer-implemented method for determining centerlines, based on cube model and comprising steps of receiving a patient-specific volume image comprising structural information about a patient's vessels represented in voxels, retrieving a three-dimensional geometry of at least one blood vessel, extracting a skeleton graph from the geometry to determine centerlines. The method works directly on the mesh domain and allegedly eliminates need for image upsampling. OSCAR KIN-CHUNG AU ET AL: "Skeleton extraction by mesh contraction", ACM TRANSACTIONS ON GRAPHICS, ACM, NY, US, vol. 27, no. 3, August 2008 (2008-08), pages 1-10, XP058355353, ISSN: 0730-0301, DOI: 10.1145/1360612.1360643 discloses geometric-based framework for extracting curve skeletons from mesh surfaces. The extraction is applied directly on the mesh domain and does not require voxelization. This approach works good as long as the vessels fit well to the elliptical model. If it is not the case then inadequacy of the model may result in significant errors in centerline trajectory.

Other related methods include an European patent specification EP2074585B1, which discloses a system for registering a vessel model with an image data set based on a joined model, comprising a reference object model and the vessel model with a centerline described with a plurality of control points.

European patent specification EP3245632B1 which discloses an imaging system that includes a sub-resolution luminal narrowing detector, that detects sub-resolution narrowing of a vessel lumen in an image volume by a centerline profile analysis and computes a sub-resolution determined diameter by modifying an approximated visible lumen diameter with the detected sub-resolution narrowing.

Publication EP3723041 of the European patent application, which discloses an image processing system configured to generate a model of a tubular object from a volumetric image, the system having a volume image acquisition unit, a geometry extraction unit, and a centerline generator.

US20130064435 which discloses systems and methods for determining the centerline of a tubular structure from volumetric data of the vessels where a contrast agent was injected into the bloodstream, to enhance the imagery for the centerline.

An active contour model is disclosed as applicable, to determine the contours of the vessel defined within image data, by normalizing the image data about a starting point.

### PROBLEM TO BE SOLVED

Known methods of generation and correction of centerlines tend to fail in a proximity of bends, narrowing or other changes of dimensions or other anomalies that cause the vessel being significantly different then assumed model (e.g. elliptical corss-section).

It is an object of the invention, to enhance the known methods and improve the mechanism of centerline generation, to reduce the need for manual correction.

### SUMMARY OF THE INVENTION

A computer-implemented method, according to the invention comprises steps of receiving a patient-specific volume image comprising structural information about patient's vessels represented in voxels, retrieving a three-dimensional geometry of at least one blood vessel, extracting a skeleton graph from the geometry, determining endpoints of the at least one blood vessel to determine an inlet and at least one outlet, computing at least one initial centerline of at least one blood vessel, the at least one initial centerline being defined by points and computed with the sub-voxel resolution, correcting the at least one initial centerline with sub-voxel precision to obtain a corrected centerline and outputting, and using the corrected centerline to extract, and/or present patient-specific data. According to the invention, the step of correcting of the at least one initial centerline comprises an iterative process including at least operations of centering and equalizing points defining the centerline. Centering points defining the centerline involves locating them further from the closest surface defined in the geometry. Equalizing points defining the centerline involves bringing each point closer to the mean position of adjacent points. Centering and equalizing are executed sequentially until the predefined stop condition is met. Centering keeps the centerline points equidistant to vessel walls, i.e., in the center of a vessel. Equalizing results in the centerline corresponding better to the direction of blood flow and prevents it from assuming shapes, that result in erroneous simulation. Executing the centering and equalizing operation sequentially in an iterative manner allows obtaining a centerline, that is useful in the simulation in a fully automatic or at least mostly automatic manner

The step of the computing at least one initial centerline, includes steps of verification of continuity of the skeleton graph, and if required, correcting the skeleton graph by connecting disjointed components, determining the initial centerlines from the skeleton graph as the shortest path between the inlet and the outlet. This sequence of steps allows for the elimination of certain kinds of errors resulting from inadequate imaging. This approach does not rely on any vessel model and therefore is not affected by rare or pathological shapes of the vessel. In particular the crosssection of the vessel needs be modelled as an ellipse.

Advantageously, iterative process of the step of correcting includes subjecting points of the centerline to image forces. The centering includes subjecting the points of the centerline to image retraction forces, pushing the points away from a nearest surface of the geometry. The equalizing consists of subjecting the points of the centerline to image tension forces towards neighboring points, so that the point is pushed towards an average position of two adjacent points.

The stop condition, advantageously, is reaching the predefined number of iteration steps. Stop condition of this kind requires low computing power when it is tested. Alternative stop conditions involve analysis of the point convergence to a stable location.

Advantageously, the step of retrieving of the three-dimensional geometry includes generation of a surface mesh representation of a blood vessel from a volume image. It makes computations required for centering easier and it makes it easier to present to the physician when manual enhancement is required. Alternative volumetric representation has an advantage, which consists in that it is used in simulation of the blood flow.

Advantageously, the step of extracting of the skeleton graph from the geometry includes steps of subjecting the geometry to voxelization, to obtain a volume representation of vessels of interest, skeletonizing the volume to obtain a volumetric skeleton representation of a blood vessel, and creating the skeleton graph from the volumetric skeleton representation. This approach appeared in test to be faster and more stable than Voronoi method used conventionally in the art. It applies in particular to bends of vessels and areas of vessel stenosis.

Advantageously, the determination of endpoints includes an automatic breadth-first search of the geometry nodes and determining inlets, and outlets of vessels using a gradient of thickness as a criterion. This approach allows for reliable, automatic or semi-automatic assignment of endpoints and directing the skeleton graph.

Advantageously, an user is prompted for an approximate location of the inlet and the determination of endpoints including a selection of the inlet, aided with filtering the endpoints candidates with a filter, based on approximate location given by the user. Thus, the operation can be sped up with very little effort from the user.

Advantageously, the points of the corrected centerline are subjected to post-processing, including at least one operation selected from a group including resampling the centerline, smoothing the position of centerline points in space, calculating centerline points metadata, pruning. Pruning reduces memory consumption required for execution of the method, while metadata are useful for visualization of the 3D geometry.

A computer program product according to the invention comprises a set of instructions, which loaded into the memory of a computer causes execution of the method according to the invention by said computer.

An image processing system configured to generate a model of a tubular object from a volumetric image, the system having a volume image acquisition unit, a geometry extraction unit, a centerline generator, a diagnosis aid module according to the invention is adapted to realize the method according to the invention.

Advantageously, the volume image acquisition unit is a computer module adapted to receive the image via a telecommunication network.

The volume image acquisition unit, advantageously, is an imaging device. The imaging device, advantageously, is selected from a group, including computer tomography scanner, photon-counting computer tomography scanner, magnetic resonance scanner, positron emission tomography scanner, single-photon emission computerized tomography scanner, ultrasound imaging device.

### BRIEF DESCRIPTION OF DRAWINGS

The invention has been described below in detail, with reference to the following figures.
Fig. 1 shows a flowchart of a method of centerlines generation.
Fig. 2 shows a flowchart of step 120 of extracting a skeleton graph from a geometry.
Fig. 3 shows a flowchart of step 130 of determining inlet and outlet endpoints.

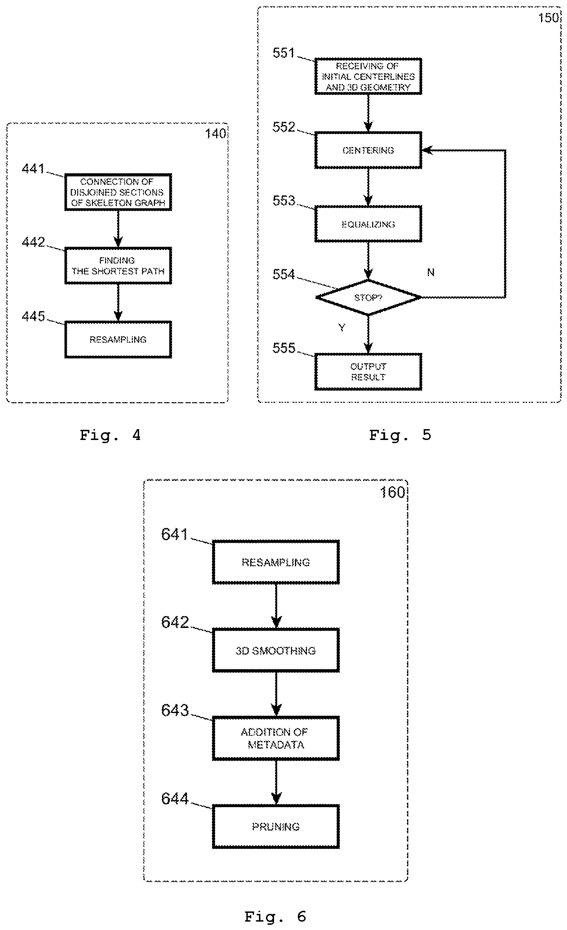

Fig. 4 shows a flowchart of step 140 of computing initial centerlines.
Fig. 5 shows a flowchart of step 150 of correction of initial centerlines.
Fig. 6 shows a flowchart of step 160 of post-processing of centerlines.
Fig. 7 a-d show (a) a surface mesh of the coronary artery and voxelized label with three different image spacing values: (b) d=1.0mm, (c) d=0.5mm, and (d) d=0.15mm, respectively.
Fig. 8 shows the skeleton obtained from the voxelized mesh shown in Fig. 7b.
Fig. 9 a, b show the effects of correcting (a) the initial centerline and (b) the centerline corrected according to the invention.
Fig. 10 a, b show (a) the corrected centerline before post-processing and (b) the same centerline after smoothing in the post-processing step.
Fig. 11 a-d show examples of the coronary artery surface mesh with corresponding centerlines (in white) determined according to the invention.
Fig. 12 shows the mean and the standard deviation of the voxelization time Tv [s] versus value of image spacing in voxel size d [mm] calculated on a set of 160 volumes of exemplary data.
Fig. 13 shows the mean and the standard deviation of the skeletonization time Ts [s] versus value of image spacing in voxel size d [mm] calculated on a set of 160 volumes of exemplary data.
Fig. 14 shows the mean and the standard deviation of the correction time Tc [s] versus the number of correction steps N [1/1] on a set of 160 volumes of exemplary data.
Fig. 15 a-d show the effect of correction after (a) 5, (b) 20, (c) 50, and (d) 100 iteration steps.
Fig. 16 a, b show the effect of correction without (a) the tension force, and (b) the retraction force.

### DETAILED DESCRIPTION OF EMBODIMENTS OF THE INVENTION

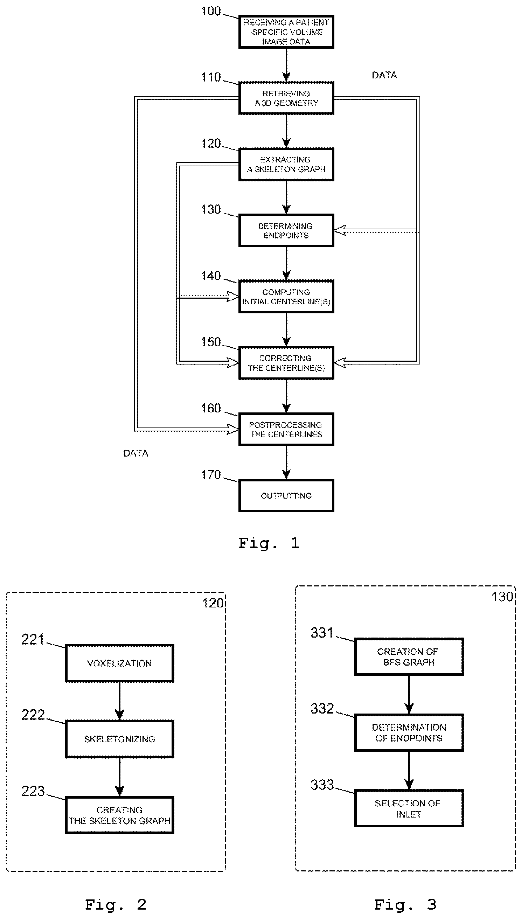

A high-level flow chart of the method, according to the invention, is shown in Fig. 1. Solid arrow denotes the flow of the method and double arrows show information fed from other steps. The method, according to the invention, starts with receiving 100 a patient-specific volume image, comprising structural information about patient's blood vessels. The volume image may be the result of any known imaging technique used for imaging blood vessels. This includes a computer tomography (CT) scan, photon-counting computer tomography (PCCT) scan, computer tomography angiography (CTA) scan, coronary computed tomography angiography (CCTA) scan, magnetic resonance imaging (MRI) scan, positron emission tomography (PET) scan, ultrasound scan, or any other medical imaging modality containing at least one blood vessel. It has been tested, that the method works very well with CCTA image series.

After the volume image is received, a three-dimensional (3D) geometry of at least one blood vessel is retrieved 110 from the said image. The 3D geometry is a representation of at least one vessel. The 3D geometry is typically represented in the form of a graph, such as surface mesh, but can also be represented in the form of a volumetric mesh or a point cloud. A 3D representation is needed for an adequate modelling and accurate simulation of a blood flow.

The 3D geometry can be retrieved manually by an expert such as a radiologist, or a trained engineer with the use of computer segmentation software tools. In the present embodiment software tools enhancing the 3D geometry creation include, but are not limited to active contours, active mesh, and machine learning. Active contours or active mesh allows creation and correction of the 3D geometry by moving its edges towards contrasts visible in the image. Machine learning methods are applied to produce an initial 3D geometry, that can be further improved or accepted by an expert. Usage of said software tools results in speeding up the step of retrieving the geometry **110.** Alternatively, full automatic tool is applied using machine learning, or artificial intelligence model trained with geometries created by radiologists, to predict the blood vessel presence in the 3D volume and convert it into to a mesh.

The output 3D geometry of step **110** is represented in the form of a surface mesh. The resolution of the surface mesh is a hyper parameter of the method. Generally, setting lower resolution promotes the speed of operation at the cost of centerline quality. The 3D geometry is used for extracting an undirected skeleton graph in step **120.** In the present embodiment the undirected skeleton graph is created in three steps, as shown in Fig. 2:
- Voxelization **221,** which involves converting the geometry of the blood vessel to voxels,
- Skeletonization **222,** which involves thinning to create a skeleton from voxels,
- Creating **223** an undirected skeleton graph from the skeleton.

Voxelization **221** includes repartitioning of the 3D space. It can lead to equally divided grid of voxels, or octrees of voxels. An octree is a tree data structure, in which each internal node has exactly eight children. Octrees are most often used to partition a 3D space by recursively subdividing it into eight octants. An example of an efficient algorithm of the voxelization used in this purpose is the TriangleMeshToBinaryImageFilter method implemented within the ITK library. It converts a triangle mesh to a predefined volumetric representation, by checking for each voxel, if it lies inside a mesh of the geometry. However, a person skilled in the art could easily find an alternative algorithm for the voxelization, providing almost as good results.

Skeletonization step **222,** in the present embodiment, is realized with the medial axis transform (MAT). The MAT determines the closest boundary points for each point of the blood vessel. An inner point belongs to the skeleton, if it has at least two closest boundary points. A formal definition of the skeleton is the locus of the centers of all maximal inscribed spheres. Example thinning algorithms that one can use in this step are Zhang's and Lee's.

An undirected skeleton graph is created in step **223** from the skeleton volume, by turning voxels into graph nodes and adding edges between connected voxels. For each node, its original location in the image is stored. Afterwards, potential disjointed graph components are connected based on proximity. Determining endpoints **130** of one blood vessel results in locating an inlet and outlets. It is repeated for each blood vessel in the 3D geometry. In the present embodiment, an approach described below, with reference to Fig. 3 is applied.

Vertices of the geometry are traversed using breadth-first search (BFS) algorithm to create BFS graph in step **331.** The algorithm is started from an arbitrary vertex. As vessels tend to be quasi-tubular structures, connected vertices lying at the same distance from the starting vertex should form cross-sectional rings. The rings are advancing along vessels in successive iterations of the BFS algorithm.

For each ring, the centroid of vertices contained in it is computed. An undirected graph is constructed with the centroids as nodes, joined with edges based on vertex connectivity of the respective rings.

The leaf nodes of the graph are expected to be located in places, where the BFS algorithm could not advance further along the vessels, i.e., at the potential extremities of the vessel geometry. These leaf nodes are further used to determine centerline endpoints **332.**

The algorithm is particularly suited for quasi-tubular structures and tends to misorient the rings in structures of other shapes.

Centerline endpoints are found **332** using leaf nodes of the BFS graph, the skeleton graph and the geometry. The node of the skeleton graph being the closest to a leaf of the BFS graph is selected as an endpoint and projected onto the geometry surface.

The inlet is selected in step **333** under the assumption that the vessel is the thickest at the inlet and each further branch is ever thinner.

The diameter of the artery mesh at every node of the skeleton graph is computed. Then, starting from each endpoint, the skeleton graph is fully traversed and differences between the diameters at adjacent nodes are computed. Computations are assigned a positive sign if the adjacent node corresponds to a lower diameter and a negative sign otherwise. Then the differences are added together. The maximal resulting sum corresponds to starting endpoint, for which descent (gradient) in diameter is the highest. This is the best candidate for the vessel inlet.

Optionally, the inlet is selected with the assistance of a user, who indicates the area in which the inlet is located. The inlet is then selected with the above method from endpoints located in the proximity of the indicated area.

The remaining endpoints are considered as the outlets.

Step **140** results in at least one initial centerline of at least one blood vessel. The centerline is defined by points and computed with a sub-voxel resolution with respect to the volume image.

Although there are vascular diagnosis methods based on 2D images and hence two-dimensional centerlines (e.g., EP3061015), accurate blood flow simulation requires a 3D representation.

A 3D representation imposes a need to obtain a 3D centerline which is needed for obtaining digitally straightened curved planar reformation (CPR) views and multi planar reformation (MPR) views as well as the simulation itself - specifically for computation of the cross-sectional planes in which the bloodstream is modelled.

Although the 2D approach simplifies the determination of the centerlines and reduces the computational power required, it does not provide sufficient accuracy of modelling and is not according to the present invention.

In step **140** of computing initial centerlines, the skeleton graph obtained in point **120** is used for the initialization of centerlines. First, disjointed skeleton graph sections are found and connected in step **441** to obtain a continuous graph.

Then, a step **442** of finding the shortest paths between the inlet and the outlets in the undirected skeleton graph is executed. The shortest path is calculated with breadth-first traversal of the graph nodes.

Points of the shortest paths are resampled to enforce the same distance between points. These points, together with the information about the beginning (inlet point) and ends (outlet points) of the blood vessel geometry are used to create a directed graph, that consists of a number of directed chains of points in the volume coordinates. This gives only information about the position in space for each node of the centerline. Each centerline *C_{m,n}* consists of m number of paths and n number of points. Paths are described in the form of the directed chains, where each path consists of a number of points from an inlet point *pᵢₙₗₑₜ* to the outlet point *pₘ*. Points are shared between these paths, and each point, other than the inlet or outlets within a path, has exactly two neighbors. One before and one after the point, along the path. At the end of the point coordinates are converted to real coordinates, to obtain the initial centerline. In a step **445** points are resampled to desired spacing. Centerline paths shorter than some predefined threshold are removed in the step of preprocessing the centerlines.

Step **150** of correcting at least one initial centerline with sub-voxel precision starts with receiving **551** the initial centerlines and the 3D geometry. Then, correcting of the at least one initial centerline comprises an iterative process including at least operations of centering **552** points defining the centerline, by locating them further from the closest surface defined in the geometry, and equalizing points **553** defining the centerline by bringing each point closer to mean position of adjacent points, executed sequentially, until stop condition **554** is met. The stop condition can be a certain number of iterations or a predefined measure of differences between the subsequent steps. Results are outputted in step **555.**

Computations are convenient if the 3D geometry is a surface mesh, however, it is possible to identify the surface of the vessels in geometry represented in voxels as an outer layer of voxels. If geometry is represented as a point cloud covering the surface of the vessel, then the distance from the closest surface is the distance from the closest point.

The centering **552** includes subjecting the points of the centerline to retraction forces, pushing points away from the nearest surface of the geometry.

The equalizing **553** includes subjecting the points of the centerline to tension forces towards neighboring points, so that each point is pushed towards the average position of two adjacent points.

This process can be realized with the following pseudocode:

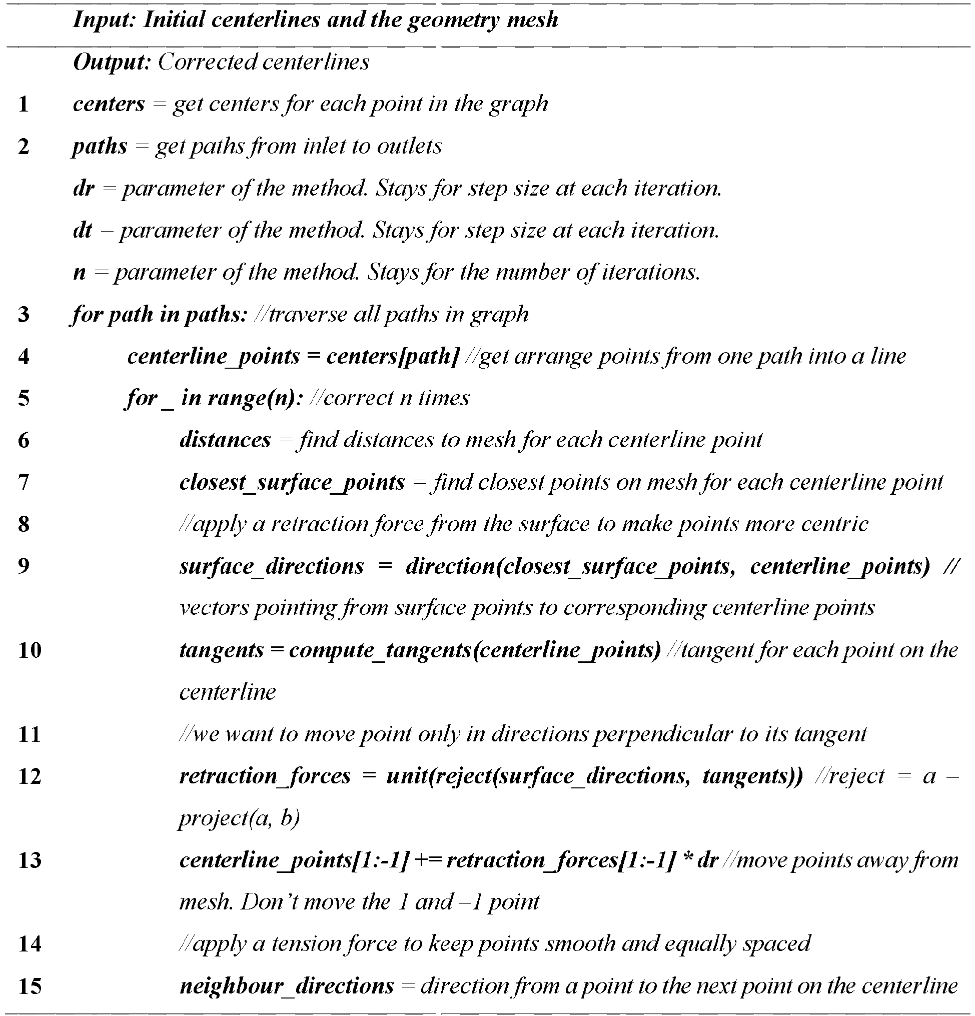

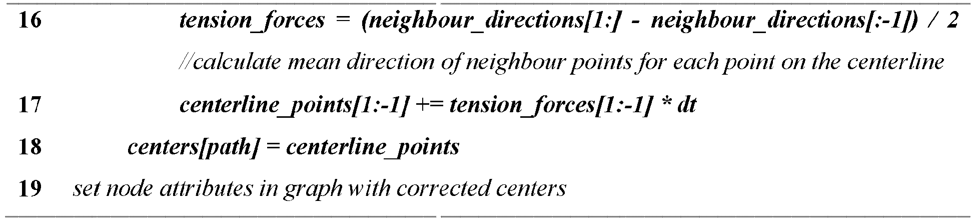

Good results were obtained with following values of parameters:
n:int = 100; n ∈ [0, 1000]
dt:float = 0.5; dt ∈ [0, 1]
dr:float = 0.02; dr ∈ [0, 1] - representing a fraction of vessel diameter at a given point of the centerline.

Corrected initial centerlines are subjected to optional post-processing **160.** It includes resampling **641** and 3D smoothing **642** of every path in the centerline.

In the post-processing step **160,** optional features of the vessel are calculated for points of the centerline and are added in optional metadata **643.** These features may include, but are not limited to, perpendicular vectors to the centerline, tangents to the centerline, cumulative distances from the starting point, diameters of circles inscribed in the shape of the geometry surface, diameters of disks inscribed in the shape of the geometry surface, minor and major semi-axes of ellipses, inscribed in the shape of the geometry surface, minimum distances to the closest vertex on the blood vessel geometry, radiuses of a disk with the same area as the area of the shape determined by the blood vessel geometry on the plane perpendicular to the centerline in the given point.

Since all centerline paths start from the same inlet, they overlap in some part, sharing a number of points. To merge them into a single centerline structure represented as a directed graph, a pruning **644** of the branches is applied, removing the overlapped parts and joining the now nonoverlapping branches with an edge.

The centerline is smooth, continuous, and in the center of the geometry. These properties are required for a precise CFD simulation and a good MPR and CPR view.

Finally, the centerlines are outputted in step 170 and used in combination with conventional blood flow (e.g., disclosed in EP3820357) simulation or just for visualization for a physician to extract and/or present patient-specific data.

The computer program product, according to the invention, can be run on a conventional computer fed with the volume images and adapted for simulating blood flow. The computer program product comprises a set of instructions, which loaded into the memory of a computer causes execution of the method according to the invention.

The program, according to the invention, can be run on a standalone computer or on the processing unit of a medical imaging device with integrated image processing means. Furthermore, the computer program product may be offered in a model of software as a service, in which volume image is uploaded to the server by the user and centerlines and simulations are computed server side, while results are delivered to the user via communication network.

Image processing system, according to the invention, is configured to generate a model of a tubular object from a volumetric image. The system has a volume image acquisition unit, a geometry extraction unit, a centerline generator, and a diagnosis aid module adapted to realize a method according to the invention. The diagnosis aid module preferably comprises a blood flow simulator and display module for presenting views of the vessels to physician.

Volume image acquisition unit can be a computer module adapted to receive the image via a telecommunication network. Alternatively, when the system is implemented in the imaging device the device itself is the volume image acquisition unit. Methods of geometry extraction, centerline generation, and blood flow simulations applicable for implementing in computer to obtain geometry extraction unit, centerline generator, and a blood flow simulator are discussed e.g., in the publication of European patent EP3820357B1. Implementation of the centerline generation and correction modules described above allows for obtaining the system, according to the invention.

The imaging device can be any medical imaging device with a display and a processing unit. This includes in particular including computer tomography scanner, PCCT (photon-counting computer tomography scanner) scanner, MRI (magnetic resonance) scanner, PET (positron emission tomography) scanner, SPECT (single-photon emission computerized tomography scanner) scanner, ultrasound scanner, or any other relevant medical imaging device.

The method proved to be useful in a wide range of parameters. Examples of the parameters that need to be a tradeoff between computing power and accuracy are discussed below.

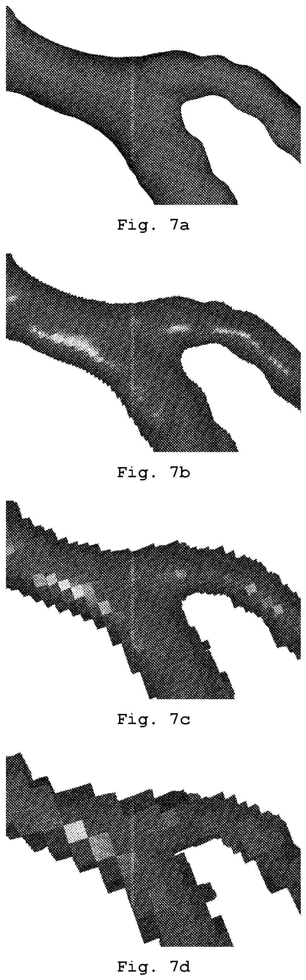

Fig. 7a shows a geometry surface mesh of a coronary artery image obtained in step **110** of retrieving geometry. Extracting **120** skeleton from the geometry requires voxelization **221.** Image size in voxelization affects both accuracy and computing time at various steps. Fig. 7 b-d show results of voxelization **221** of the mesh shown in Fig. 7a with different values of image spacing (voxel size) d. Fig. 7b shows result of voxelization with d=0.15 mm, Fig. 7c shows voxelization with d=0.5 mm, Fig. 7d shows voxelization with d=1 mm.

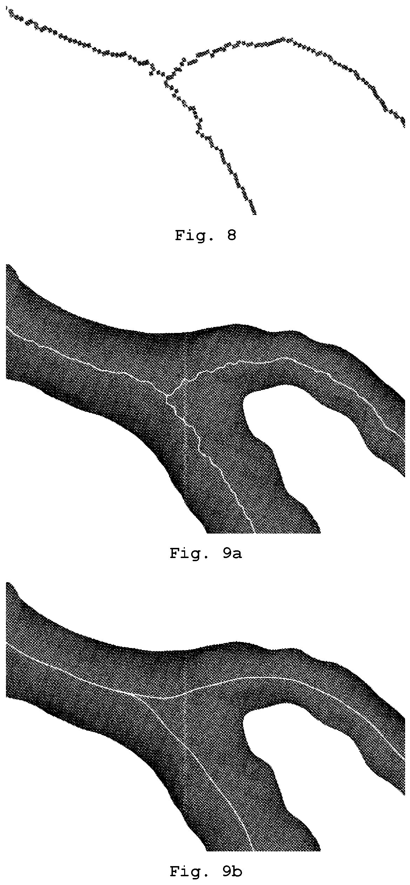

Fig. 8 shows an example of a skeleton obtained in step 222, which is used to create skeleton graph **223,** which is then used to generate the initial centerline.

Fig. 9a shows an example of a section of an initial centerline generated in step **140** of the method, according to the invention. Fig. 9b shows the centerline corrected using the method according to the invention.

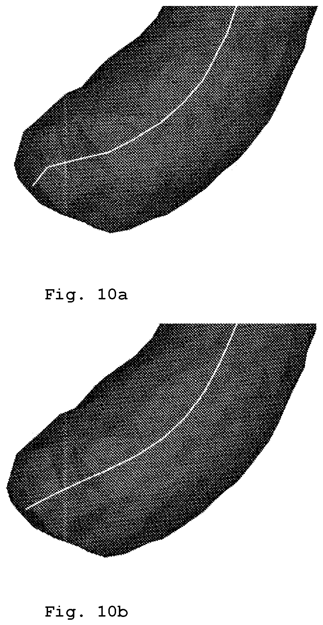

Fig. 10 a and b show the results of post-processing at the end of a blood vessel. Fig. 10a shows the centerline at the end of the blood vessel before smoothing **642** and Fig. 10b shows the centerline after smoothing **642.** Smoothing may consist in applying a relatively weak low-pass filter to the coordinates of the points of the centerline. In the example shown in Fig. 10b Butterworth filtering was applied. Smoothing enables the elimination of numerical artifacts, especially the ones correlated with particular geometry shapes that were not corrected earlier.

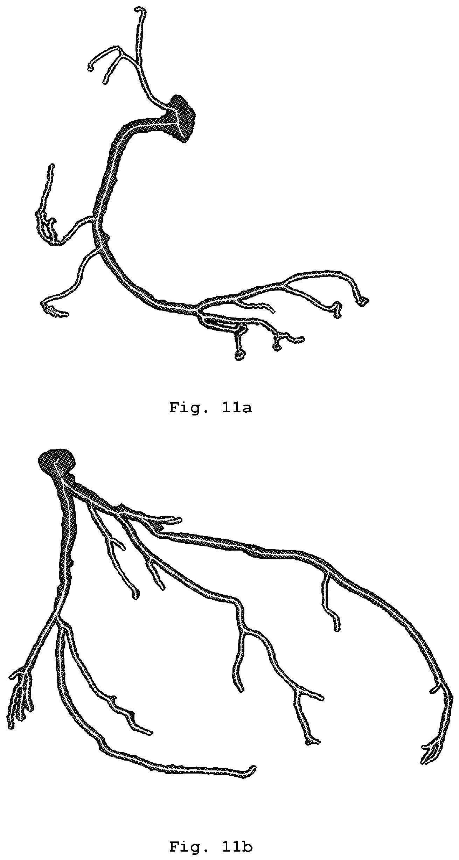

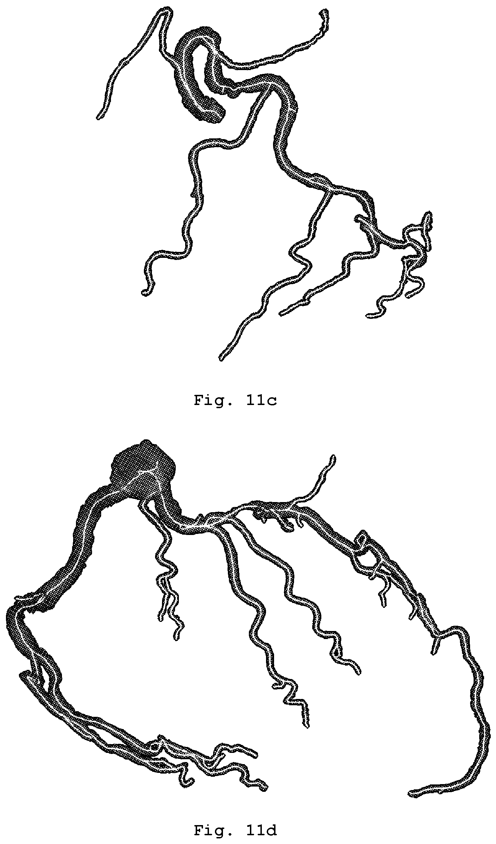

Fig. 11 a-d show examples of the coronary artery surface mesh with a corresponding centerline (in white) determined according to the invention.

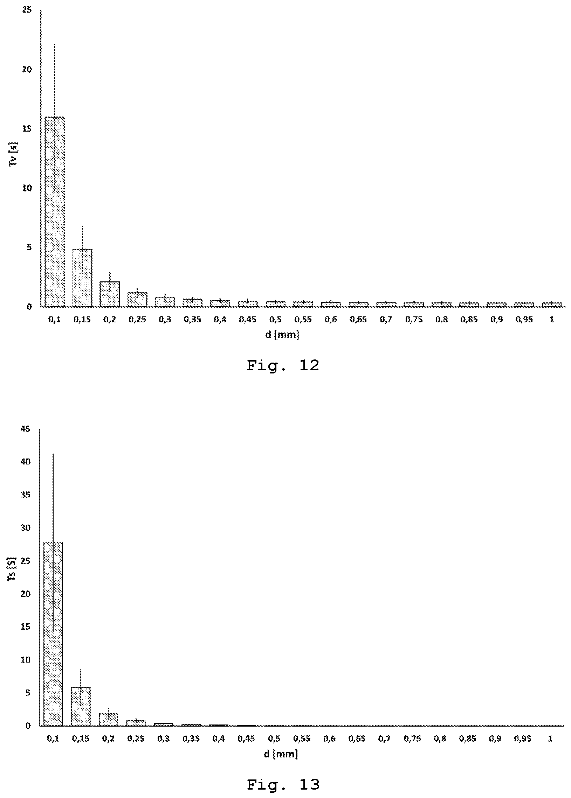

Fig. 12 shows how image spacing (voxel size) d [mm] affects voxelization time Tv [s]. The data were obtained from 160 images of different patients. Since the number of voxels increases cubically, a trade-off must be found between the accuracy and duration of the voxelization. For the data tested a value that meets the best quality requirements and speed of operation was d = 0.15 mm. With that value, on test equipment voxelization took approximately 5s.

Fig. 13 shows the dependence of skeletonization time Ts [s] on image spacing d [mm]. Results were obtained with use of a scikit-image skeletonize algorithm which is based on a method created by Lee et al skeletonization iteratively removes border voxels until only one-pixel representation is left. Higher resolution requires more iterations of the algorithm to complete its work. For d=0.15 mm, the skeletonization time is about 6s.

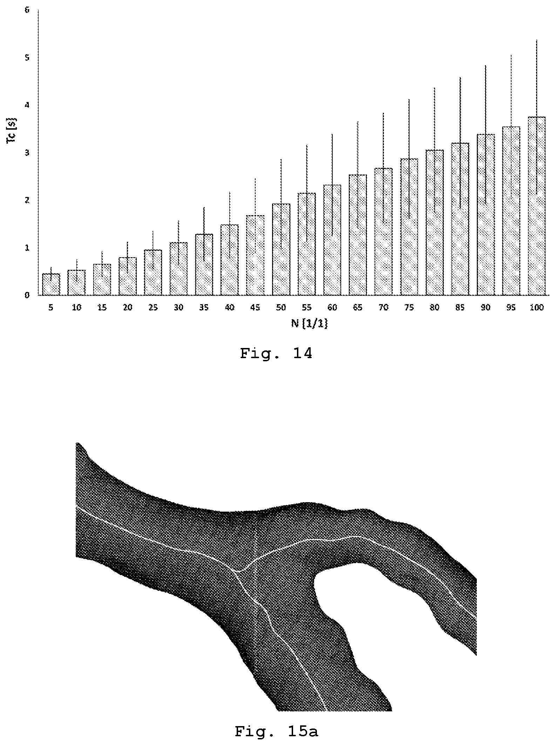

Fig. 14 shows the linear dependence between the number of corrective iterations N [1/1] and correction time Tc [s]. The relation is approximately linear. With time increasing the number of iterations brings small differences to the centerlines. On more powerful computing machines, it is possible to enforce a larger number of corrections by default. On the other hand, on slower machines, especially integrated with older imaging devices, it is possible to provide a smaller number of iterations by default and an option for the user to manually override and add additional corrections if needed.

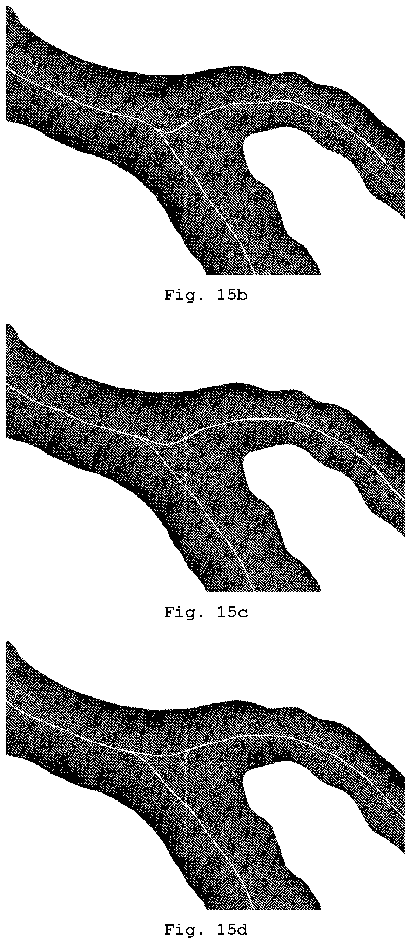

Fig. 15 a-d show the effect of correction after (a) 5, (b) 20, (c) 50, and (d) 100 iterations of correction. It has been observed that 100 iterations provided the best tradeoff between an accuracy and processing time.

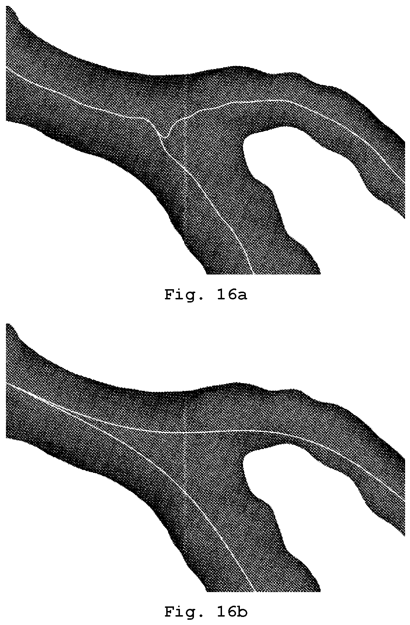

Effect of the applying the equalizing **553** e.g., by tension force can be observed by comparing the image shown in Fig. 15d with Fig. 16a. Fig. 16a shows a centerline after the correction procedure without equalizing **553.** Centerlines in this form would not be useful, because at least some of the properties calculated for each point, such as tangents would be very disturbed.

Effect of the applying centering **552** e.g., by retraction force can be observed by comparing the image shown in Fig. 15d with Fig. 16b. Fig. 16b shows the centerline after the correction procedure without centering **552.** Centerlines are smoother, but they tend to run too close to vessel wall. Also, it is unclear how many iterations one should use, as normally, the forces balance each other, which results in convergence. Without retraction force centerlines do not converge and increasing the number of iterations results in continuously straightened lines.

Exemplary embodiments of the invention as described above merely illustrate, but do not limit the invention. The inventions encompass methods and systems for calculation of the centerlines of the vessels, especially coronary arteries from surface meshes. A method, according to an embodiment of the invention, can be easily implemented and can produce robust, and accurate segmentation for a very limited time and memory cost, typically less than 20 sec and 3GB on average. Combining methods of determining centerlines discussed above with state-of-the-art coronary artery segmentation methods and state-of-the-art methods for calculation of hemodynamics factors results in the simulation of a blood flow, allowing diagnosis with little need for intervention of a specialized operator.

Notably, adequate, determining centerlines can be applied also for the modelling and simulation of substantially tubular objects based on the representation of the object in volumetric imaging. Accordingly, the invention is applicable in modelling other vessels than the coronary vessels, in modelling of the digestive system or other tubular objects especially the ones guiding some kind of fluids.

The computers, in the sense of the above description, are to be understood as hardware devices including computers, microcontrollers, signal processing, programmable gate arrays, understood as hardware computers, graphic cards, applicationspecific integrated circuits, or other processing digital devices used for image processing, as well as distributed solutions including cloud computing environments.

Those skilled in the art, given the teachings of the above description, are able to routinely propose multiple hardware and software solutions for device, according to the invention, and for computer-implemented execution of the method, according to the invention, as well as methods of obtaining training information.

It is stressed, that the above description is a mere illustration of the present invention and those skilled in the art will be able to propose many alternative embodiments covered by the scope of protection, as defined in the attached claims.

In the claims, any reference signs placed between parentheses shall not be construed as limiting the claim. The use of the verb "comprise" does not mean that there are no elements or steps other than those stated in a claim. The article "a" or "an" preceding an element does not exclude the presence of a plurality of such elements.

## Claims

1. A computer-implemented method comprising steps of
receiving **(100)** a patient-specific volume image comprising structural information about a patient's vessels represented in voxels,
retrieving **(110)** a three-dimensional geometry of at least one blood vessel,
extracting **(120)** a skeleton graph from the geometry,
determining **(130)** endpoints of the at least one blood vessel to determine an inlet and at least one outlet,
computing **(140)** at least one initial centerline of at least one blood vessel, the at least one initial centerline being defined by points and computed with the sub-voxel resolution,
correcting **(150)** the at least one initial centerline with sub-voxel precision to obtain a corrected centerline, comprising an iterative process involving equalizing points **(553)** by defining the centerline by bringing each point closer to the mean position of adjacent points
outputting **(170)** and using the corrected centerline to extract and/or present patient-specific data
**characterized in that**
the step of the computing **(140)** at least one initial centerline includes
verification of continuity of the skeleton graph, and if required, correcting the skeleton graph by connecting disjointed components,
determining the initial centerlines from the skeleton graph as the shortest path between the inlet and the outlet, and
in the step of correcting **(150)** of the at least one initial centerline, the iterative process
includes additionally at least an operation of centering **(552)** points defining the centerline by locating them further from the closest surface defined in the geometry, and
wherein the centering **(552)** and the equalizing **(553)** are executed sequentially, until the predefined stop condition **(554)** is met.

2. Computer-implemented method, according to claim 1, wherein the iterative process of the step of correcting **(150)** includes subjecting points of the centerline to image forces, wherein
the centering **(552)** includes subjecting the points of the centerline to image retraction forces pushing the points away from a nearest point of the 3D geometry, and
the equalizing **(553)** consists in subjecting the points of the centerline to image tension forces towards neighboring points, so that the point is pushed towards an average position of two adjacent points.

3. Computer- implemented method according to claim 1, wherein the stop condition **(554)** is running the simulation predetermined number of times.

4. Computer-implemented method according to claim 1 or 2, wherein the step of retrieving **(110)** of the three-dimensional geometry includes generation of a surface mesh representation of a blood vessel from a volume image.

5. Computer-implemented method, according to claim 1 or 2 or 3 or 4, wherein the step of extracting **(120)** of
the skeleton graph from the geometry includes subjecting the geometry to voxelization **(221)** to obtain
a volume representation of vessels of interest, skeletonizing **(222)** the volume to obtain a volumetric
skeleton representation of a blood vessel, and creating **(223)** the skeleton graph from the volumetric
skeleton representation.

6. Computer-implemented method, according to any of claims from 1 to 5, wherein the determination of endpoints includes an automatic breadth-first search of the geometry nodes and determining inlets and outlets of vessels using a gradient of thickness as a criterion.

7. Computer-implemented method, according to any of claims 1 to 6, wherein a user is prompted for an approximate location of the inlet and the determination of endpoints, includes a selection of the inlet, aided with filtering the endpoints candidates with a filter, based on approximate location given by the user.

8. Computer-implemented method, according to any of claims 1 to 7, wherein the points of the corrected centerline are subjected to post-processing including at least one operation selected from a group including resampling (641) the centerline, smoothing (642) the position of centerline points in space, calculating centerline points metadata **(643),** pruning **(644).**

9. A computer program product comprising a set of instructions, which loaded into the memory of a computer cause execution of the method, according to any of claims 1 to 8, by said computer.

10. An image processing system configured to generate a model of a tubular object from a volumetric image, the system having a volume image acquisition unit,
a geometry extraction unit,
a centerline generator,
a diagnosis aid module
**characterized in that** it is adapted to realize the method as defined in any of claims 1 to 8.

11. Image processing system according to claim 10, wherein the volume image acquisition unit is a computer module adapted to receive the image via a telecommunication network.

12. Image processing system according to claim 10, wherein the volume image acquisition unit is an imaging device.

13. Image processing system according to claim 12, wherein the imaging device is selected from a group including computer tomography scanner, photon-counting computer tomography scanner, magnetic resonance scanner, positron emission tomography scanner, single-photon emission computerized tomography scanner, ultrasound imaging device.

## Patentansprüche

1. Computerimplementiertes Verfahren, umfassend die Schritte
Empfangen **(100)** eines patientenspezifischen Volumenbildes, das Strukturinformationen über Gefäße eines Patienten, die in Voxeln dargestellt sind, umfasst,
Abrufen **(110)** einer dreidimensionalen Geometrie von mindestens einem Blutgefäß,
Extrahieren **(120)** eines Skelettgraphen aus der Geometrie,
Bestimmen **(130)** von Endpunkten des mindestens einen Blutgefäßes, um einen Einlass und mindestens einen Auslass zu bestimmen,
Berechnen **(140)** mindestens einer anfänglichen Mittellinie mindestens eines Blutgefäßes, wobei die mindestens eine anfängliche Mittellinie durch Punkte definiert ist und mit der Sub-Voxel-Auflösung berechnet wird,
Korrigieren **(150)** der mindestens einen anfänglichen Mittellinie mit Sub-Voxel-Präzision, um eine korrigierte Mittellinie zu erhalten, umfassend einen iterativen Prozess, der ein Ausgleichen von Punkten **(553)** vorsieht, indem die Mittellinie definiert wird, indem jeder Punkt an die mittlere Position von benachbarten Punkten angenähert wird,
Ausgeben **(170)** und Verwenden der korrigierten Mittellinie, um patientenspezifische Daten zu extrahieren und/oder darzustellen,
**dadurch gekennzeichnet, dass**
der Schritt des Berechnens **(140)** mindestens einer initialen Mittellinie umfasst:
die Überprüfung der Kontinuität des Skelettgraphen und, falls erforderlich, die Korrektur des Skelettgraphen durch Verbinden getrennter Komponenten,
das Bestimmen der initialen Mittellinie aus dem Skelettgraphen als kürzester Pfad zwischen dem Einlass und dem Auslass, und
in dem Schritt des Korrigierens **(150)** der mindestens einen anfänglichen Mittellinie der iterative Prozess zusätzlich mindestens einen Vorgang umfasst zum
Zentrieren **(552)** von Punkten, die die Mittellinie definieren, durch deren Anordnung weiter entfernt von der nächstgelegenen Fläche, die in der Geometrie definiert ist, und
wobei das Zentrieren **(552)** und das Ausgleichen **(553)** nacheinander ausgeführt werden, bis die vordefinierte Stoppbedingung **(554)** erfüllt ist.

2. Computerimplementiertes Verfahren nach Anspruch 1, wobei der iterative Prozess des Schritts des Korrigierens **(150)** ein Aussetzen von Punkten der Mittellinie gegenüber Bildkräften umfasst, wobei
das Zentrieren **(552)** ein Aussetzen der Punkte der Mittellinie gegenüber Bildrückzugskräften, die die Punkte von einem nächstgelegenen Punkt der 3D-Geometrie wegdrücken, umfasst und
das Ausgleichen **(553)** darin besteht, die Punkte der Mittellinie Bildspannungskräften in Richtung benachbarter Punkte auszusetzen, so dass der Punkt in Richtung einer Durchschnittsposition von zwei benachbarten Punkten gedrückt wird.

3. Computerimplementiertes Verfahren nach Anspruch 1, wobei die Stoppbedingung **(554)** ein Ausführen der Simulation für eine vorbestimmte Anzahl von Malen ist.

4. Computerimplementiertes Verfahren nach Anspruch 1 oder 2, wobei der Schritt des Abrufens **(110)** der dreidimensionalen Geometrie ein Erzeugen einer Flächennetzdarstellung eines Blutgefäßes aus einem Volumenbild umfasst.

5. Computerimplementiertes Verfahren nach Anspruch 1 oder 2 oder 3 oder 4, wobei der Schritt des Extrahierens **(120)** des Skelettgraphen aus der Geometrie umfasst Unterziehen der Geometrie einer Voxelisierung **(221),** um eine
Volumendarstellung von relevanten Gefäßen zu erhalten, Skelettieren **(222)** des Volumens, um eine volumetrische
Skelettdarstellung eines Blutgefäßes zu erhalten, und Erstellen **(223)** des Skelettgraphen aus der volumetrischen Skelettdarstellung.

6. Computerimplementiertes Verfahren nach einem der Ansprüche 1 bis 5, wobei die Bestimmung der Endpunkte eine automatische Breitensuche der Geometrieknoten umfasst und Einlässe und Auslässe von Gefäßen unter Verwendung eines Dickenverlaufs als Kriterium bestimmt werden.

7. Computerimplementiertes Verfahren nach einem der Ansprüche 1 bis 6, wobei ein Benutzer aufgefordert wird, einen ungefähren Ort des Einlasses anzugeben, und die Bestimmung von Endpunkten eine Auswahl des Einlasses umfasst, die durch Filtern der Endpunktkandidaten mit einem Filter basierend auf einem ungefähren Ort, der vom Benutzer angegeben wird, unterstützt wird.

8. Computerimplementiertes Verfahren nach einem der Ansprüche 1 bis 7, wobei die Punkte der korrigierten Mittellinie einem Nachbearbeiten unterzogen werden, das mindestens einen Vorgang umfasst, der aus einer Gruppe ausgewählt wird, umfassend ein Neuabtasten **(641)** der Mittellinie, ein Glätten **(642)** der Position von Mittellinienpunkten im Raum, ein Berechnen von Mittellinienpunkt-Metadaten **(643)** und ein Kürzen **(644).**

9. Computerprogrammprodukt, umfassend einen Satz von Anweisungen, die, in den Speicher eines Computers geladen, eine Ausführung des Verfahrens nach einem der Ansprüche 1 bis 8 durch den Computer bewirken.

10. Bildverarbeitungssystem, eingerichtet, um ein Modell eines röhrenförmigen Objekts aus einem volumetrischen Bild zu erzeugen, wobei das System eine Volumenbilderfassungseinheit,
eine Geometrie-Extraktionseinheit,
einen Mittelliniengenerator,
ein Diagnosehilfsmodul
aufweist,
**dadurch gekennzeichnet, dass** es ausgelegt ist, das Verfahren nach einem der Ansprüche 1 bis 8 durchzuführen.

11. Bildverarbeitungssystem nach Anspruch 10, wobei die Volumenbilderfassungseinheit ein Computermodul ist, das ausgelegt ist, das Bild über ein Telekommunikationsnetz zu empfangen.

12. Bildverarbeitungssystem nach Anspruch 10, wobei die Volumenbilderfassungseinheit eine Bildgebungsvorrichtung ist.

13. Bildverarbeitungssystem nach Anspruch 12, wobei die Bildgebungsvorrichtung aus einer Gruppe ausgewählt ist, umfassend einen Computertomographie-Scanner, einen Photonen zählenden Computertomographie-Scanner, einen Magnetresonanz-Scanner, einen Positronen-Emissions-Tomographie-Scanner, einen Einzelphotonen-Emissions-Computertomographie-Scanner und eine Ultraschall-Bildgebungsvorrichtung.

## Revendications

1. Procédé mis en œuvre par ordinateur comprenant les étapes de
réception **(100)** d'une image volumique spécifique au patient comprenant des informations structurelles concernant les vaisseaux du patient représentés en voxels ;
récupération **(110)** d'une géométrie tridimensionnelle d'au moins un vaisseau sanguin ;
extraction **(120)** d'un graphe squelettique à partir de la géométrie ;
détermination **(130)** des points d'extrémité de l'au moins un vaisseau sanguin pour déterminer une entrée et au moins une sortie ;
calcul **(140)** d'au moins une ligne centrale initiale d'au moins un vaisseau sanguin, l'au moins une ligne centrale initiale étant définie par des points et calculée avec la résolution sous-voxel ;
correction **(150)** de l'au moins une ligne centrale initiale avec une précision sous-voxel pour obtenir une ligne centrale corrigée, comprenant un processus itératif impliquant l'égalisation des points **(553)** en définissant la ligne centrale par rapprochement de chaque point de la position moyenne des points adjacents ;
sortie **(170)** et utilisation de la ligne centrale corrigée pour extraire et/ou présenter les données spécifiques au patient
**caractérisé en ce que**
l'étape de calcul **(140)** d'au moins une ligne centrale initiale comprend:
la vérification de la continuité du graphe squelettique et, si nécessaire, la correction du graphe squelettique en reliant les composants disjoints;
la détermination des lignes centrales initiales à partir du graphe squelettique comme le chemin le plus court entre l'entrée et la sortie; et
lors de l'étape de correction **(150)** de l'au moins une ligne centrale initiale, le processus itératif comprend en outre au moins une opération de centrage **(552)** des points définissant la ligne centrale en les éloignant de la surface la plus proche définie dans la géométrie, et
dans lequel le centrage **(552)** et l'égalisation **(553)** sont exécutés séquentiellement, jusqu'à ce que la condition d'arrêt prédéfinie **(554)** soit satisfaite.

2. Procédé mis en œuvre par ordinateur selon la revendication 1, dans lequel le processus itératif de l'étape de correction **(150)** comprend la soumission des points de la ligne centrale à des forces d'image, dans lequel
le centrage **(552)** comprend la soumission des points de la ligne centrale à des forces de rétraction d'image éloignant les points du point le plus proche de la géométrie 3D, et
l'égalisation **(553)** consiste à soumettre les points de la ligne centrale à des forces de tension d'image vers des points voisins, de sorte que le point soit poussé vers une position moyenne de deux points adjacents.

3. Procédé mis en œuvre par ordinateur selon la revendication 1, dans lequel la condition d'arrêt **(554)** est l'exécution de la simulation un nombre prédéterminé de fois.

4. Procédé mis en œuvre par ordinateur selon la revendication 1 ou 2, dans lequel l'étape de récupération **(110)** de la géométrie tridimensionnelle comprend la génération d'une représentation maillée de surface d'un vaisseau sanguin à partir d'une image volumique.

5. Procédé mis en œuvre par ordinateur, selon la revendication 1, 2, 3 ou 4, dans lequel l'étape d'extraction (120) du graphe squelettique à partir de la géométrie comprend
la soumission de la géométrie à une voxélisation **(221)** pour obtenir une représentation volumique des vaisseaux d'intérêt,
la squelettisation **(222)** du volume pour obtenir une représentation volumétrique squelettique d'un vaisseau sanguin, et
la création **(223)** du graphe squelettique à partir de la représentation volumétrique squelettique.

6. Procédé mis en œuvre par ordinateur, selon l'une des revendications 1 à 5, dans lequel la détermination des points d'extrémité comprend une recherche automatique en largeur d'abord des nœuds géométriques et la détermination des entrées et sorties des vaisseaux en utilisant un gradient d'épaisseur comme critère.

7. Procédé mis en œuvre par ordinateur, selon l'une des revendications 1 à 6, dans lequel l'utilisateur est invité à indiquer l'emplacement approximatif de l'entrée et la détermination des points d'extrémité, comprend une sélection de l'entrée, assistée par le filtrage des candidats de points d'extrémité avec un filtre, sur la base de l'emplacement approximatif fourni par l'utilisateur.

8. Procédé mis en œuvre par ordinateur, selon l'une des revendications 1 à 7, dans lequel les points de la ligne centrale corrigée sont soumis à un post-traitement comprenant au moins une opération sélectionnée parmi un groupe comprenant le rééchantillonnage **(641)** de la ligne centrale, le lissage **(642)** de la position des points de ligne centrale dans l'espace, le calcul des métadonnées de points de ligne centrale **(643)** et l'élagage **(644).**

9. Produit de programme informatique comprenant un ensemble d'instructions, qui, lorsqu'elles sont chargées dans la mémoire d'un ordinateur, provoquent l'exécution du procédé, selon l'une des revendications 1 à 8, par ledit ordinateur.

10. Système de traitement d'image configuré pour générer un modèle d'un objet tubulaire à partir d'une image volumétrique, le système ayant une unité d'acquisition d'image volumique,
une unité d'extraction géométrique,
un générateur de ligne centrale,
un module d'aide au diagnostic,
**caractérisé en ce qu'**il est adapté pour réaliser le procédé tel que défini dans l'une des revendications 1 à 8.

11. Système de traitement d'image selon la revendication 10, dans lequel l'unité d'acquisition d'image volumique est un module informatique adapté pour recevoir l'image via un réseau de télécommunication.

12. Système de traitement d'image selon la revendication 10, dans lequel l'unité d'acquisition d'image volumique est un dispositif d'imagerie.

13. Système de traitement d'image selon la revendication 12, dans lequel le dispositif d'imagerie est choisi dans un groupe comprenant un scanner de tomographie par ordinateur, un scanner de tomographie par ordinateur à comptage de photons, un scanner à résonance magnétique, un scanner de tomographie à émission de positons, un scanner de tomographie assistée par ordinateur à émission monophotonique et un dispositif d'imagerie par ultrasons.
